# EUROPEAN PATENT SPECIFICATION

(11) **EP 4 496 952 B1**
(45) Date of publication and mention of the grant of the patent: **18.11.2026**
(21) Application number: 23705363.2
(22) Date of filing: 14.02.2023
(51) Int. Cl.: F16H 57/04

(54) **HOUSING FOR GEAR ASSEMBLY, AND GEAR ASSEMBLY**
GEHÄUSE FÜR GETRIEBEANORDNUNG UND GETRIEBEANORDNUNG
LOGEMENT POUR ENSEMBLE ENGRENAGE, ET ENSEMBLE ENGRENAGE

(30) Priority: 22.03.2022 CN 202210286221
(43) Date of publication of application: 29.01.2025
(73) Proprietor: Robert Bosch GmbH, 70442 Stuttgart (DE)
(72) Inventor: GAO, Lei, Wuxi, Jiangsu, 214028 (CN); WANG, Minzhu, Wuxi, Jiangsu, 214028 (CN)
(86) International application number: PCT/EP2023/053583
(87) International publication number: WO 2023/179972

(56) References cited:
- EP-A1- 3 964 733
- CN-A- 107 676 472
- DE-A1- 19 916 377

## Description

### TECHNICAL FIELD

The present invention relates to a housing for a gear assembly, and further relates to the gear assembly.

### BACKGROUND

In the industrial field, especially in the field of vehicle industry, a gear assembly including a plurality of gears is often used. The plurality of gears often cooperate with each other through engagement to form a transmission configuration. The gear assembly combines different gears and rotates the gears to convert a high rotating speed into a low rotating speed and convert a low torque into a high torque, thereby facilitating the operation of other assemblies and/or components in the vehicle.

Due to the rotation property of the gear assembly, the gear assembly is highly susceptible to adverse effects such as wear and/or overheating in use. Therefore, in practical work, it is desirable that there is a way to alleviate at least the above problems of wear and/or overheating, so that the gear assembly can work continuously, smoothly and robustly in any environment condition.

In view of the above problems, a suitable functional liquid, such as a liquid lubricant, is often required to lubricate these gear assemblies. Accordingly, the gear assembly often also includes a housing configured to be formed with a functional liquid storage tank that is suitably located below the gear to supply the liquid lubricant to the gear conveniently and effectively.

However, a housing for a gear assembly disclosed in the prior art still cannot achieve the expected effect, that is, the housing for the gear assembly still has some defects. For example, the amount required each time the functional liquid is replaced is too large. This not only brings a greater economic cost, but also requires a larger functional liquid storage tank, which further occupies the originally limited space of the gear assembly, thereby causing bulkiness of the whole equipment, which is very inconvenient. In addition, in the disclosure of the prior art, the functional liquid is often consumed at a high speed, and the lubricating operation often suffers from a series of troubles such as low efficiency. These problems are, of course, expected to be alleviated and even avoided, and thus need to be solved urgently.

EP 3 964 733 A1, on which the two part form is based, discloses a gear assembly with a housing having a guiding element to form a channel for a lubricant. Further reference is made to DE 199 16 377 A1.

In view of, but not limited to, the above situations, it is desirable to provide a housing for a gear assembly that is at least advantageous over the prior art.

### SUMMARY

An objective of the present invention is to provide a housing for a gear assembly, and the gear assembly, which can at least partially solve the problems in the prior art.

The invention is defined by the independent claims. To achieve at least the above objective, in one aspect, the present invention provides a housing for a gear assembly, wherein the gear assembly comprises: a first gear; a second gear engaged with the first gear, the diameter of the second gear being greater than that of the first gear; a first bearing and a second bearing respectively supporting the first gear; and a third bearing and a fourth bearing respectively supporting the second gear; wherein the first bearing and the third bearing are located on a first side relative to the first gear and the second gear, and the second bearing and the fourth bearing are located on a second side opposite to the first side relative to the first gear and the second gear; and wherein each gear and each bearing are arranged inside the housing.The housing comprises a functional liquid storage tank for storing a functional liquid formed on an inner bottom side of the housing, and the outline of the functional liquid storage tank is defined by a bottom wall of the housing. The bottom of the second gear is configured to be immersed into the functional liquid stored in the functional liquid storage tank. The housing further comprises: a separator configured to separate the functional liquid storage tank into an upper partition and a lower partition, and when the gear assembly is operating, stirring is performed by the second gear to cause the functional liquid to circulate around the separator. The separator is implemented as a long separating plate in form of a long plate body which is configured such that: with the functional liquid stored in the functional liq-uid storage tank, when the gear assembly is working, the flow direction of the func-tional liquid located in the upper partition is the same as the movement direction of a lower edge of the second gear, and the flow direction of the functional liquid lo-cated in the lower partition is opposite to the movement direction of the lower edge of the second gear, wherein the ratio of a height of the long separating plate measured from the bottom of the functional liquid storage tank to a depth thereof is configured to correspond to the ratio of the flow rate of the functional liquid in the upper partition to the flow rate of the functional liquid in the lower partition.

In another aspect, the present invention provides a gear assembly, comprising the housing for the gear assembly as described above.

According to the present invention, a housing for a gear assembly is provided to maintain sufficient application of a functional liquid to the gear, and also reduce the amount of the functional liquid that needs to be supplemented; increased loss by contact between excessive functional liquid and the gear can be avoided to improve the working efficiency of the gear assembly; and regardless of the rotating direction of the gear in the gear assembly, the gear assembly can be effectively and efficiently used. In particular, for example, under the working condition of reverse rotation, due to the possible phenomenon of insufficient oil supply in this case, a circulating oil channel can be formed in the housing (with a long separating plate) for the gear assembly as claimed by the present invention, so that oil can be supplied timely during both forward and reverse rotation, which further facilitates, for example, stabilization of the temperature of the whole working environment.

### BRIEF DESCRIPTION OF THE DRAWINGS

The foregoing and other aspects of the present invention will be more fully understood from the following detailed description and with reference to the accompanying drawings. It should be noted that the drawings are not drawn to scale. Certain details may be enlarged for clarity of presentation, and some details that are not necessarily shown are omitted.
FIG. 1 is a two-dimensional view of a feasible embodiment of a gear assembly according to the present invention, with a functional liquid storage tank shown; and
FIG. 2 is a three-dimensional view of the gear assembly in FIG. 1.

### DETAILED DESCRIPTION

Some feasible embodiments of the present invention are described below with reference to the accompanying drawings.

The present invention relates to a housing for a gear assembly, and the gear assembly.

The gear assembly has two ends: an input end and an output end. The input end of the gear assembly may be connected to a power source (not shown), and the output end of the gear assembly may be connected to a transmission assembly (not shown). The transmission assembly will further transfer a torque to other suitable components and/or assemblies.

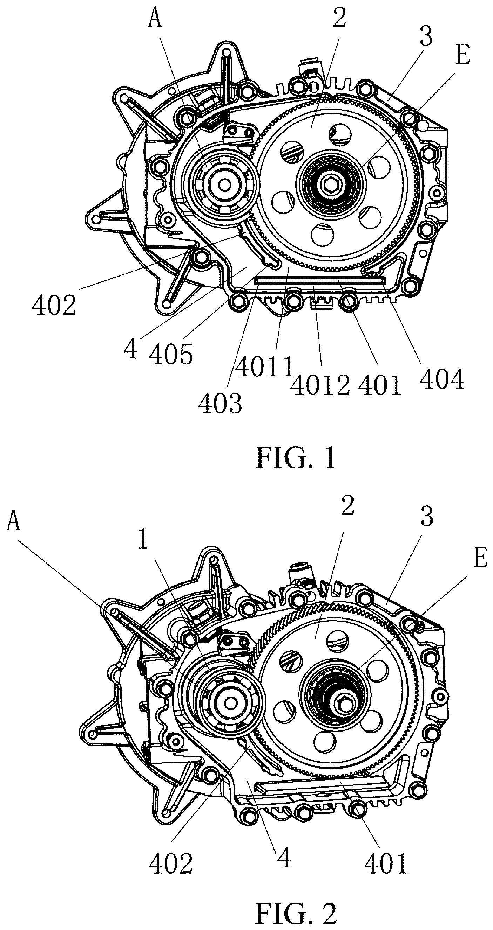

As shown in FIG. 1 and FIG. 2, the gear assembly includes at least two gears, for example: a first gear 1 and a second gear 2. The first gear 1 and the second gear 2 may be configured to be engaged with each other. By means of the engagement, the first gear 1 may rotate to drive the second gear 2 to rotate; and/or the second gear 2 may rotate to drive the first gear 1 to rotate. The diameter of the first gear 1 may be configured to be different from the diameter of the second gear 2 so as to change the torque and/or the rotating speed. In the embodiment shown in FIG. 1, the diameter of the second gear 2 is greater than that of the first gear 1.

The gear assembly further includes a first bearing A, a second bearing (not shown), a third bearing E, and a fourth bearing (not shown). The first bearing A and the second bearing are configured to cooperate with the first gear 1. The third bearing E and the fourth bearing are configured to cooperate with the second gear 2.

In an embodiment, the first gear 1 and the second gear 2 cooperate with each other in the same plane (the paper surface shown in FIG. 1); and the space surrounding the first gear and the second gear is divided by the plane into two sides opposite to each other: a first side (as shown in FIG. 1, extending perpendicular to the paper surface and toward a reader) and a second side (as shown in FIG. 1, extending perpendicular to the paper surface and in a direction of the back of the paper). The first bearing A is configured to support the first gear 1 and be positioned on the first side. The second bearing supports the first gear 1 and is positioned on the second side. The third bearing E supports the second gear 2 and is positioned on the first side. The fourth bearing supports the second gear 2 and is positioned on the second side.

The gear assembly further includes a housing 3. The housing 3 defines an interior space. Other components of the gear assembly, the first gear 1, the second gear 2, and the bearings (the first bearing A, the second bearing, the third bearing E, and the fourth bearing) cooperating with the first gear and the second gear, are all arranged in the interior space defined by the housing 3. In this way, the housing 3 isolates the above components from the external environment to prevent the above components from suffering from adverse effects (for example, of temperature, humidity, and other physical and chemical factors) from the surrounding environment.

As shown in FIG. 1 and FIG. 2, the housing 3 is also formed with a functional liquid storage tank 4. The functional liquid storage tank 4 is configured to store a functional liquid (not shown) required by the gear assembly during operation. The functional liquid storage tank 4 is located inside the housing 3 and provided at the bottom of the housing 3. The outline of the functional liquid storage tank 4 is defined by a bottom wall of the housing 3.

When the functional liquid is stored in the functional liquid storage tank 4, at least one gear (shown as the second gear 2 in FIG. 1 and FIG. 2) is in contact with the functional liquid, and a lower edge of the at least one gear is immersed in the functional liquid by a certain distance from the surface of the functional liquid. In this way, during operation of the gear assembly, due to the rotation of the at least one gear, the functional liquid stored in the functional liquid storage tank 4 is stirred, and the functional liquid is applied to the at least one gear with the rotation of the at least one gear; in addition, due to the splashing effect of the stirred functional liquid, the functional liquid can be attached to another gear (shown as the first gear 1 in FIG. 1 and FIG. 2) and/or bearing so as to apply the functional liquid to the another gear and/or bearing.

The housing 3 includes a separator. In this way, when the gear assembly is operating, stirring is performed by the at least one gear to cause the functional liquid to circulate around the separator. As shown in FIG. 1 and FIG. 2, the separator is implemented as a long separating plate 401. The long separating plate 401 is configured to separate the functional liquid storage tank 4 into an upper partition 4011 and a lower partition 4012.

During use, the functional liquid is injected into the functional liquid storage tank 4. When the gear assembly is working, the flow direction of the functional liquid located in the upper partition 4011 is the same as the movement direction of a lower edge of the second gear 2, and the flow direction of the functional liquid located in the lower partition 4012 is opposite to the movement direction of the lower edge of the second gear 2. Specifically, when the second gear 2 rotates (for example, in a power generation condition) in a counter-clockwise direction (shown in FIG. 1), the functional liquid located in the upper partition 4011 flows in the left direction (shown in FIG. 1), and the functional liquid located in the lower partition 4012 flows in the right direction (shown in FIG. 1); in addition, when the second gear 2 rotates (for example, in a motor condition) in a clockwise direction (shown in FIG. 1), the functional liquid located in the upper partition 4011 flows in the right direction (shown in FIG. 1), and the functional liquid located in the lower partition 4012 flows in the left direction (shown in FIG. 1).

The long separating plate 401 includes a long plate body. The housing 3 includes a pair of side walls opposite to each other, and a front end wall and a rear end wall opposite to each other. Gear shafts of the first gear 1 and the second gear 2 are perpendicular to the pair of side walls. The long plate body extends horizontally from one of the pair of sidewalls. The long plate body may be implemented as having a length extending in the front-rear direction (shown in FIG. 1) and having a width perpendicular to the length direction. Preferably, the length of the long plate body may be set to be greater than or equal to a maximum chord length of the second gear 2 tangent to the surface of the functional liquid. Additionally and preferably, the width of the long plate body may be set to be greater than or equal to the thickness of the second gear 2 in a radial direction thereof. The long plate body includes an upper surface facing the second gear 2 and a lower surface facing the bottom of the housing 3 and opposite to the upper surface. Optionally, the upper surface of the long plate body is provided with protrusions and/or recesses extending in the front-rear direction (in the length direction of the long plate body) to reduce friction between the functional liquid and the upper surface of the long plate body, thereby facilitating flow of the functional liquid in the upper partition 4011. Alternatively or additionally, the lower surface of the long plate body is provided with protrusions and/or recesses extending in the front-rear direction (in the length direction of the long plate body) to reduce friction between the functional liquid and the lower surface of the long plate body, thereby facilitating flow of the functional liquid in the lower partition 4012. Optionally, the number and/or the size of protrusions and/or recesses provided on the lower surface of the long plate body is greater than the number and/or the size of protrusions and/or recesses provided on the upper surface of the long plate body.

In one embodiment, the number and/or the size of protrusions and/or recesses provided on the lower surface of the long plate body is greater than the number and/or the size of protrusions and/or recesses provided on the upper surface of the long plate body.

The long separating plate 401 has a height from the bottom of the functional liquid storage tank 4. Correspondingly, the long separating plate 401 has a depth from the surface of the functional liquid. Optionally, the height of the long separating plate is greater than or equal to the depth of the long separating plate. Preferably, the height of the long separating plate is greater than the depth of the long separating plate. The ratio of the height of the long separating plate to the depth thereof is configured to correspond to the ratio of the flow rate of the functional liquid in the upper partition 4011 to the flow rate of the functional liquid in the lower partition 4012.

In an optional embodiment, the long separating plate 401 may be configured to be attached to an inner wall of the housing 3 in any suitable manner. The attachment manner may be permanent connection (for example, welding) or removable connection (for example, bolt connection).

Any suitable material may be used to form the long separating plate 401. Preferably, the material forming the upper surface and/or the lower surface of the long separating plate 401 may be a material having a small friction coefficient (for example, metal or alloy) and/or may be processed into a smooth surface.

The long separating plate 401 has a front end 403 and a rear end 404 which are distributed at ends in the length direction of the long separating plate. For example, the front end 403 and/or the rear end 404 of the long separating plate 401 may be configured to have a progressive portion. Alternatively or additionally, the front end 403 and/or the rear end 404 of the long separating plate 401 may be configured with a round corner. The flow of the functional liquid is further facilitated by the manner described above.

In addition, alternatively or optionally, the housing 3 may further include a flow guide assisting member. The flow guide assisting member is configured to guide the functional fluid in the functional liquid storage tank 4 to move towards the first gear 1 and/or the second gear 2. For example, as shown in FIG. 1 and FIG. 2, the flow guide assisting member may be implemented as a flow guide assisting plate 402.

The flow guide assisting plate 402 may include an assisting plate body. The assisting plate body may be implemented as having a length (shown in FIG. 1) extending in an oblique direction with a horizontal component and a vertical component, and having a width in a direction perpendicular to the paper surface.

The assisting plate body has an upper end (for example, hidden behind the bearing A in FIG. 1 and FIG. 2) and a lower end 405 which are distributed at ends in the length direction of the assisting plate body. The upper end of the assisting plate body is close to the first gear 1 and/or the second gear 2. For example, the upper end of the assisting plate body is close to an edge of the first gear 1 and/or the second gear 2 below the gear axis. The lower end 405 of the assisting plate body is immersed into the functional liquid stored in the functional liquid storage tank 4. Preferably, the lower end 405 of the assisting plate body is configured to be close to the long separating plate 401. For example, the lower end 405 of the assisting plate body is close to the upper surface of the long plate body. For example, the lower end of the assisting plate body is close to the front end 403 and/or the rear end 404 of the long separating plate 401. For example, the lower end of the assisting plate body is close to the front end 403 and/or the rear end 404 of the long separating plate 401 and also is close to the upper surface of the long plate body. By the manner described above, one part of the assisting plate body is immersed into the functional liquid stored in the functional liquid storage tank 4.

The assisting plate body includes an inner surface facing the second gear 2 and an outer surface facing an inner wall of the housing 3 and opposite to the inner surface. Optionally, the inner surface of the assisting plate body is provided with protrusions and/or recesses extending in the length direction of the assisting plate body to reduce friction between the functional liquid and the inner surface of the assisting plate body, thereby facilitating the movement of the functional liquid in contact with the inner surface of the assisting plate body.

The flow guide assisting plate 402 may be configured to be attached to the inner wall of the housing 3 in any suitable manner. The attachment manner may be permanent connection (for example, welding) or removable connection (for example, bolt connection).

Any suitable material may be used to form the flow guide assisting plate 402. Preferably, the material forming the inner surface of the flow guide assisting plate 402 may be a material having a small friction coefficient (for example, metal or alloy) and/or may be processed into a smooth surface.

The flow guide assisting plate 402 may further include a plurality of flow guide assisting plates. For example, the flow guide assisting plates may be two flow guide assisting plates. For example, the two flow guide assisting plates correspond to two gears: a first gear 1 and a second gear 2, respectively.

It can be conceived that in a case that the gear assembly includes more gears, correspondingly, the number of the flow guide assisting plates may be configured to correspond to the number of the gears. For example, the number of the flow guide assisting plates is the same as the number of the gears.

A "functional liquid storage tank" refers to a storage space capable of storing a functional liquid. The functional liquid may be implemented as any suitable liquid material, including, but not limited to, various liquid materials for vehicles, preferably, a lubricant. The lubricant may be implemented as any liquid lubricant suitable for a gear assembly, such as lubricating oil. However, under suitable configurations and conditions, the functional liquid may be implemented as other liquid materials, including cooling liquid and the like, even under suitable conditions, for example, fuel oil.

From the content disclosed by the present invention, a housing for a gear assembly can maintain sufficient application of a functional liquid to a gear, and also reduce the amount of the functional liquid that needs to be supplemented; and can avoid increased loss by contact between excessive functional liquid and the gear to improve the working efficiency of the gear assembly; and regardless of the rotating direction of the gear in the gear assembly, the gear assembly can be effectively and efficiently used.

Other advantages may further include: the gear assembly can be lubricated by the lubricant before work during first use or after maintenance and replacement, unlike the disclosure in the prior art where the gear assembly must work for a period of time without lubricant protection before being able to work with the lubricant. Therefore, the content disclosed in the present invention can better reduce friction generated within the gear assembly, so that the generation of heat and the formation of wear particles can be reduced, and the efficiency can be improved. Other advantages may further include: the gear assembly is cooled, which is because the liquid lubricant can transfer heat through the flowability of the liquid lubricant and has high specific heat capacity. Other advantages may further include: the lubricant can take away scraps generated inside the gear assembly and pollutants from the external environment. Correspondingly optionally, the gear assembly may further include a filter (not shown). The filter may be arranged in any suitable position. The scraps generated inside the gear assembly and the pollutants from the external environment may be removed in the filter. Other advantages may further include: corrosion of each component inside the gear assembly can be avoided, and a gas seal may be possibly formed.

The present invention also discloses a gear assembly, including the housing for the gear assembly as described above. The gear assembly may be implemented as including any suitable structure in which at least two gears cooperate with each other, preferably, but not limited to a speed reducer.

As used herein, the term "comprising" is open-ended and includes one or more stated features, components, assemblies, or functions, but does not preclude the presence or increase of one or more other features, components, assemblies, functions, or combinations thereof.

## Claims

1. A housing for a gear assembly,
the gear assembly comprising:
a first gear (1);
a second gear (2) engaged with the first gear (1), the diameter of the second gear (2) being greater than that of the first gear (1);
a first bearing (A) and a second bearing respectively supporting the first gear (1); and
a third bearing (E) and a fourth bearing respectively supporting the second gear (2); wherein the first bearing (A) and the third bearing (E) are located on a first side relative to the first gear and the second gear, and the second bearing and the fourth bearing are located on a second side opposite to the first side relative to the first gear and the second gear; and
wherein each gear and each bearing are arranged inside the housing (3);
the housing comprising:
a functional liquid storage tank (4) for storing a functional liquid formed on an inner bottom side of the housing (3), wherein the outline of the functional liquid storage tank (4) is defined by a bottom wall of the housing (3), and the bottom of the second gear is configured to be immersed into the functional liquid stored in the functional liquid storage tank (4),
and
a separator which is configured to separate the functional liquid storage tank (4) into an upper partition (4011) and a lower partition (4012), and when the gear assembly is operating, stirring is performed by the second gear to cause the functional liquid to circulate around the separator,
**characterized in that**
the separator is implemented as a long separating plate (401) in form of a long plate body wherein the ratio of a height of the long separating plate measured from the bottom of the functional liquid storage tank (4) to a depth thereof is configured to correspond to the ratio of the flow rate of the functional liquid in the upper partition (4011) to the flow rate of the functional liquid in the lower partition (4012), such that: with the functional liquid stored in the functional liquid storage tank (4), when the gear assembly is working, the flow direction of the functional liquid located in the upper partition (4011) is the same as the movement direction of a lower edge of the second gear (2), and the flow direction of the functional liquid located in the lower partition (4012) is opposite to the movement direction of the lower edge of the second gear (2).

2. The housing for the gear assembly according to claim 1, wherein the housing comprises a pair of side walls opposite to each other, and a front end wall and a rear end wall opposite to each other, gear shafts of the first gear and the second gear are perpendicular to the pair of side walls, the long separating plate (401) comprises a long plate body, the long plate body extends horizontally from one of the pair of side walls, and the long plate body has a length extending in the front-rear direction, the length of the long plate body being configured to be greater than or equal to a maximum chord length of the second gear (2) tangent to the surface of the functional liquid stored in the functional liquid storage tank (4).

3. The housing for the gear assembly according to claim 2, wherein the long plate body has a width extending in a direction perpendicular to the pair of sidewalls, and the width of the long plate body is configured to be greater than the thickness of the second gear (2) in a radial direction thereof.

4. The housing for the gear assembly according to claim 2 or 3, wherein the long plate body has an upper surface facing the second gear (2) and a lower surface facing the bottom of the housing (3) and opposite to the upper surface, and the upper surface and/or the lower surface of the long plate body is provided with protrusions and/or recesses extending in the front-rear direction to reduce friction between the functional liquid and the upper surface of the long plate body, thereby facilitating flow of the functional liquid in the upper partition (4011).

5. The housing for the gear assembly according to claim 4, wherein the number and/or the size of protrusions and/or recesses provided on the lower surface of the long plate body is greater than the number and/or the size of protrusions and/or recesses provided on the upper surface of the long plate body.

6. The housing for the gear assembly according to any one of claims 1-3, further comprising: a flow guide assisting plate (402), the flow guide assisting plate comprising an assisting plate body, an upper end of the assisting plate body being close to the first gear (1) and/or the second gear (2), and a lower end of the assisting plate body being located below the surface of the functional liquid stored in the functional liquid storage tank (4).

7. The housing for the gear assembly according to claim 6, comprising a number of flow guide assisting plates (402), the number of the flow guide assisting plates (402) corresponds to the number of the gears (1, 2).

8. The housing for the gear assembly according to any one of claims 1-3, wherein the long separating plate (401) has round corners located at the ends in the length direction of the long separating plate, thereby facilitating flow of the functional liquid.

9. A gear assembly, comprising: the housing for the gear assembly according to any one of claims 1-8.

## Patentansprüche

1. Gehäuse für eine Zahnradbaugruppe,
wobei die Zahnradbaugruppe Folgendes umfasst:
ein erstes Zahnrad (1);
ein zweites Zahnrad (2), das in das ersten Zahnrad (1) eingreift, wobei der Durchmesser des zweiten Zahnrads (2) größer als jener des ersten Zahnrads (1) ist;
ein erstes Lager (A) und ein zweites Lager, die jeweils das erste Zahnrad (1) tragen; und
ein drittes Lager (E) und ein viertes Lager, die jeweils das zweite Zahnrad (2) tragen;
wobei sich das erste Lager (A) und das dritte Lager (E) bezüglich des ersten Zahnrads und des zweiten Zahnrads auf einer ersten Seite befinden und sich das zweite Lager und das vierte Lager bezüglich des ersten Zahnrads und des zweiten Zahnrads auf einer zweiten Seite gegenüber der ersten Seite befinden; und
wobei jedes Zahnrad und jedes Lager innerhalb des Gehäuses (3) angeordnet sind;
wobei das Gehäuse Folgendes umfasst:
einen Funktionsflüssigkeitslagertank (4) zum Lagern einer Funktionsflüssigkeit, der an einer inneren Unterseite des Gehäuses (3) gebildet ist, wobei der Umriss des Funktionsflüssigkeitslagertanks (4) durch eine Bodenwand des Gehäuses (3) definiert ist und die Unterseite des zweiten Zahnrads konfiguriert ist, in die in dem Funktionsflüssigkeitslagertank (4) gelagerte Funktionsflüssigkeit eingetaucht zu werden,
und
einen Separator, der konfiguriert ist, den Funktionsflüssigkeitslagertank (4) in ein oberes Abteil (4011) und ein unteres Abteil (4012) zu trennen, wobei dann, wenn die Zahnradbaugruppe in Betrieb ist, durch das zweite Zahnrad ein Rühren ausgeführt wird, um zu verursachen, dass die Funktionsflüssigkeit um den Separator zirkuliert,
**dadurch gekennzeichnet, dass**
der Separator als eine lange Trennplatte (401) in der Form eines langen Plattenkörpers implementiert ist, wobei das Verhältnis einer Höhe der langen Trennplatte, gemessen vom Boden des Funktionsflüssigkeitslagertanks (4), zu einer Tiefe davon so konfiguriert ist, dass es dem Verhältnis der Durchflussmenge der Funktionsflüssigkeit in dem oberen Abteil (4011) zu der Durchflussmenge der Funktionsflüssigkeit in dem unteren Abteil (4012) entspricht, so dass: bei der im Funktionsflüssigkeitslagertank (4) gelagerten Funktionsflüssigkeit, wenn die Zahnradbaugruppe arbeitet, die Strömungsrichtung der Funktionsflüssigkeit, die sich in dem oberen Abteil (4011) befindet, die gleiche wie die Bewegungsrichtung eines unteren Randes des zweiten Zahnrads (2) ist, während die Strömungsrichtung der Funktionsflüssigkeit, die sich in dem unteren Abteil (4012) befindet, zu der Bewegungsrichtung des unteren Randes des zweiten Zahnrads (2) entgegengesetzt ist.

2. Gehäuse für die Zahnradbaugruppe nach Anspruch 1, wobei das Gehäuse ein Paar von Seitenwänden, die einander gegenüberliegen, und eine vordere Stirnwand und eine hintere Stirnwand, die einander gegenüberliegen, umfasst, wobei die Zahnradwellen des ersten Zahnrads und des zweiten Zahnrads zu dem Paar von Seitenwänden senkrecht sind, wobei die lange Trennplatte (401) einen langen Plattenkörper umfasst, wobei sich der lange Plattenkörper horizontal von einer des Paars von Seitenwänden erstreckt und der lange Plattenkörper eine Länge aufweist, die sich in der Vorn-Hinten-Richtung erstreckt, wobei die Länge des langen Plattenkörpers so konfiguriert ist, dass sie größer als eine oder gleich einer maximalen Sehnenlänge des zweiten Zahnrads (2) ist, die zur Oberfläche der in dem Funktionsflüssigkeitslagertank (4) gelagerten Funktionsflüssigkeit tangential ist.

3. Gehäuse für die Zahnradbaugruppe nach Anspruch 2, wobei der lange Plattenkörper eine Breite aufweist, die sich in einer Richtung senkrecht zu dem Paar von Seitenwänden erstreckt, und wobei die Breite des langen Plattenkörpers so konfiguriert ist, dass sie größer als die Dicke des zweiten Zahnrads (2) in einer radialen Richtung davon ist.

4. Gehäuse für die Zahnradbaugruppe nach Anspruch 2 oder 3, wobei der lange Plattenkörper eine Oberseite, die dem zweiten Zahnrad (2) zugewandt ist, und eine Unterseite, die dem Boden des Gehäuses (3) zugewandt ist und der Oberseite gegenüberliegt, aufweist, wobei die Oberseite und/oder die Unterseite des langen Plattenkörpers mit Vorsprüngen und/oder Aussparungen bereitgestellt sind, die sich in der Vorn-Hinten-Richtung erstrecken, um die Reibung zwischen der Funktionsflüssigkeit und der Oberseite des langen Plattenkörpers zu verringern, wodurch die Strömung der Funktionsflüssigkeit in dem oberen Abteil (4011) erleichtert wird.

5. Gehäuse für die Zahnradbaugruppe nach Anspruch 4, wobei die Anzahl und/oder die Größe der Vorsprünge und/oder der Aussparungen, die an der Unterseite des langen Plattenkörpers vorgesehen sind, größer als die Anzahl und/oder die Größe der Vorsprünge und/oder Aussparungen, die an der Oberseite des langen Plattenkörpers vorgesehen sind, ist.

6. Gehäuse für die Zahnradbaugruppe nach einem der Ansprüche 1-3, das ferner Folgendes umfasst: eine Strömungsleitunterstützungsplatte (402), wobei die Strömungsleitunterstützungsplatte einen Unterstützungsplattenkörper umfasst, wobei sich ein oberes Ende des Unterstützungsplattenkörpers nah bei dem ersten Zahnrad (1) und/oder dem zweiten Zahnrad (2) befindet und sich ein unteres Ende des Unterstützungsplattenkörpers unter der Oberfläche der in dem Funktionsflüssigkeitslagertank (4) gelagerten Funktionsflüssigkeit befindet.

7. Gehäuse für die Zahnradbaugruppe nach Anspruch 6, das eine Anzahl von Strömungsleitunterstützungsplatten (402) umfasst, wobei die Anzahl der Strömungsleitunterstützungsplatten (402) der Anzahl der Zahnräder (1, 2) entspricht.

8. Gehäuse für die Zahnradbaugruppe nach einem der Ansprüche 1-3, wobei die lange Trennplatte (401) runde Ecken aufweist, die sich an den Enden in Längsrichtung der langen Trennplatte befinden, wodurch die Strömung der Funktionsflüssigkeit erleichtert wird.

9. Zahnradbaugruppe, die Folgendes umfasst: das Gehäuse für die Zahnradbaugruppe nach einem der Ansprüche 1-8.

## Revendications

1. Carter pour un ensemble de pièces d'engrenage, l'ensemble de pièces d'engrenage comprenant :
une première pièce d'engrenage (1) ;
une seconde pièce d'engrenage (2) en prise avec la première pièce d'engrenage (1), le diamètre de la seconde pièce d'engrenage (2) étant supérieur à celui de la première pièce d'engrenage (1) ;
un premier palier (A) et un deuxième palier supportant respectivement la première pièce d'engrenage (1) ; et
un troisième palier (E) et un quatrième palier supportant respectivement la seconde pièce d'engrenage (2) ;
dans lequel le premier palier (A) et le troisième palier (E) sont situés sur un premier côté relativement à la première pièce d'engrenage et à la seconde pièce d'engrenage, et le deuxième palier et le quatrième palier sont situés sur un second côté opposé au premier côté relativement à la première pièce d'engrenage et à la seconde pièce d'engrenage ; et
dans lequel chaque pièce d'engrenage et chaque palier sont agencés à l'intérieur du carter (3) ;
le carter comprenant :
un réservoir de stockage de liquide fonctionnel (4) destiné à stocker un liquide fonctionnel formé sur un côté bas intérieur du carter (3), dans lequel le contour du réservoir de stockage de liquide fonctionnel (4) est défini par une paroi basse du carter (3), et le bas de la seconde pièce d'engrenage est configuré pour être immergé dans le liquide fonctionnel stocké dans le réservoir de stockage de liquide fonctionnel (4),
et
un séparateur qui est configuré pour séparer le réservoir de stockage de liquide fonctionnel (4) en une partie séparée supérieure (4011) et une partie séparée inférieure (4012), et, lorsque l'ensemble de pièces d'engrenage est en fonctionnement, un remuement est réalisé par la seconde pièce d'engrenage pour amener le liquide fonctionnel à circuler autour du séparateur,
**caractérisé en ce que**
le séparateur est mis en œuvre sous forme de longue plaque de séparation (401) ayant la forme d'un long corps de plaque dans lequel le rapport d'une hauteur de la longue plaque de séparation mesurée depuis le bas du réservoir de stockage de liquide fonctionnel (4) à une profondeur de celle-ci est configuré pour correspondre au rapport du débit d'écoulement du liquide fonctionnel dans la partie séparée supérieure (4011) au débit d'écoulement du liquide fonctionnel dans la partie séparée inférieure (4012), de manière telle que : avec le liquide fonctionnel stocké dans le réservoir de stockage de liquide fonctionnel (4), lorsque l'ensemble de pièces d'engrenage est en marche, la direction d'écoulement du liquide fonctionnel situé dans la partie séparée supérieure (4011) est la même que la direction de mouvement d'un bord inférieur de la seconde pièce d'engrenage (2), et la direction d'écoulement du liquide fonctionnel situé dans la partie séparée inférieure (4012) est opposée à la direction de mouvement du bord inférieur de la seconde pièce d'engrenage (2).

2. Carter pour l'ensemble de pièces d'engrenage selon la revendication 1, dans lequel le carter comprend une paire de parois latérales opposées l'une à l'autre, et une paroi d'extrémité avant et une paroi d'extrémité opposées l'une à l'autre, des arbres de pièce d'engrenage de la première pièce d'engrenage et de la seconde pièce d'engrenage sont perpendiculaires à la paire de parois latérales, la longue plaque de séparation (401) comprend un long corps de plaque, le long corps de plaque s'étend horizontalement depuis une de la paire de parois latérales, et le long corps de plaque a une longueur s'étendant dans la direction avant-arrière, la longueur du long corps de plaque étant configurée pour être supérieure ou égale à une longueur de corde maximum de la seconde pièce d'engrenage (2) tangente à la surface du liquide fonctionnel stocké dans le réservoir de stockage de liquide fonctionnel (4).

3. Carter pour l'ensemble de pièces d'engrenage selon la revendication 2, dans lequel le long corps de plaque a une largeur s'étendant dans une direction perpendiculaire à la paire de parois latérales, et la largeur du long corps de plaque est configurée pour être supérieure à l'épaisseur de la seconde pièce d'engrenage (2) dans une direction radiale de celle-ci.

4. Carter pour l'ensemble de pièces d'engrenage selon la revendication 2 ou 3, dans lequel le long corps de plaque a une surface supérieure faisant face à la seconde pièce d'engrenage (2) et une surface inférieure faisant face au bas du carter (3) et opposée à la surface supérieure, et la surface supérieure et/ou la surface inférieure du long corps de plaque est pourvue de saillies et/ou d'évidements s'étendant dans la direction avant-arrière pour réduire le frottement entre le liquide fonctionnel et la surface supérieure du long corps de plaque, facilitant ainsi l'écoulement du liquide fonctionnel dans la partie séparée supérieure (4011).

5. Carter pour l'ensemble de pièces d'engrenage selon la revendication 4, dans lequel le nombre et/ou la taille de saillies et/ou d'évidements prévus sur la surface inférieure du long corps de plaque est supérieur au nombre et/ou à la taille de saillies et/ou évidements prévus sur la surface supérieure du long corps de plaque.

6. Carter pour l'ensemble de pièces d'engrenage selon l'une quelconque des revendications 1 à 3, comprenant en outre : une plaque d'aide au guidage d'écoulement (402), la plaque d'aide au guidage d'écoulement comprenant un corps de plaque d'aide, une extrémité supérieure du corps de plaque d'aide étant proche de la première pièce d'engrenage (1) et/ou de la seconde pièce d'engrenage (2), et une extrémité inférieure du corps de plaque d'aide étant située sous la surface du liquide fonctionnel stocké dans le réservoir de stockage de liquide fonctionnel (4).

7. Carter pour l'ensemble de pièces d'engrenage selon la revendication 6, comprenant un nombre de plaques d'aide au guidage d'écoulement (402), le nombre de la plaques d'aide au guidage d'écoulement (402) correspond au nombre des pièces d'engrenage (1, 2).

8. Carter pour l'ensemble de pièces d'engrenage selon l'une quelconque des revendications 1 à 3, dans lequel la longue plaque de séparation (401) a des coins ronds situés aux extrémités dans la direction de longueur de la longue plaque de séparation, facilitant ainsi l'écoulement du liquide fonctionnel.

9. Ensemble de pièces d'engrenage, comprenant : le carter pour l'ensemble de pièces d'engrenage selon l'une quelconque des revendications 1 à 8.
